# EUROPEAN PATENT APPLICATION

(11) **EP 4 086 036 A1**
(43) Date of publication of application: **09.11.2022**
(21) Application number: 20910821.6
(22) Date of filing: 27.11.2020
(51) Int. Cl.: B23Q 7/00, B23Q 17/00

(54) **WORKPIECE EXCHANGE DEVICE AND METHOD**

(30) Priority: 31.12.2019 CN 201911424967
(71) Applicant: Kede Numerical Control Co., Ltd., Dalian, Liaoning 116000 (CN)
(72) Inventor: CHEN, Hu, Dalian, Liaoning 116000 (CN); HE, Xingjian, Dalian, Liaoning 116000 (CN); TANG, Hongtao, Dalian, Liaoning 116000 (CN); GONG, Xinglin, Dalian, Liaoning 116023 (CN); REN, Zhihui, Dalian, Liaoning 116000 (CN); LI, Shaozhi, Dalian, Liaoning 116000 (CN); GUO, Hongzhen, Dalian, Liaoning 116000 (CN); ZHANG, Guojing, Dalian, Liaoning 116000 (CN); SONG, Mingshan, Dalian, Liaoning 116000 (CN); LIU, Shaoyi, Dalian, Liaoning 116000 (CN); JU, Zidan, Dalian, Liaoning 116000 (CN)
(74) Representative: JD&P Patent Attorneys Joanna Dargiewicz & Partners
(86) International application number: PCT/CN2020/132124
(87) International publication number: WO 2021/135762

(57) **Abstract**

A workpiece exchange device, including: a workpiece spindle; and a workpiece library, wherein: the workpiece spindle is arranged on a pallet, the pallet is arranged on a slide table, the pallet can move along a Z axis of a machine tool, and the slide table can move along an X axis of the machine tool; and the workpiece library is used to store workpieces, and the workpiece spindle can move along the X-axis and Z-axis of the machine tool and grab a workpiece. The present invention also discloses a method for exchanging workpieces. Through the coordinated movement of the slide table and the pallet, the workpiece spindle can take out a workpiece to be machined from the workpiece library or return a machined workpiece into the workpiece library. The present invention uses a machine tool coordinate system to grab the workpiece with high precision and high speed, and does not need to add an auxiliary mechanism, and has the advantages of simple structure, high stability and good reliability.

## Description

### TECHNICAL FIELD

The present invention relates to the field of workpiece exchange of machine tools, particularly, to a workpiece exchange device and method.

### BACKGROUND ART

Workpiece exchange of existing machine tools is mostly performed by robots, mechanical hands or through manual operations.

It is fast and efficient to use a robot to exchange workpieces, but when the robot is working, the work stroke needs to take up extra space, which is not conducive to the production organization. Moreover, because the core components of the robot are monopolized by foreign countries, the procurement cost and maintenance cost are extremely high, and the spare parts are shipped from abroad, and the purchase cycle is long, resulting in a long maintenance cycle, which is not conducive to the continuous production of enterprises. Once the core components of the robot fail suddenly, affecting production, enterprises will suffer very serious losses.

The structure of mechanical hand is complex, and mechanical hand completes the exchange of workpiece via motions of multiple linear axes and adopts a high-speed servo motor to cooperate with the lead screw transmission, and the overall cost of multiple linear axes is relatively high. Some mechanical hands adopt cylinder transmission and cooperate with limiters and sensors to realize the exchange of workpieces. However, when this type of mechanical hand exchanges a workpiece, the sensor must ensure that the cylinder moves completely in place after detection. Before reaching the collision limit, the speed of the cylinder needs to be reduced to reserve buffer time, and that makes the entire exchange of the workpiece relatively slow, and there is mechanical wear and loosening of the limit positioning, resulting in offset, which needs to be adjusted repeatedly.

The cost of exchanging workpieces manually is lower than the procurement cost and maintenance cost of robot, and is relatively stable, but manual exchange of workpieces is slow, and the work efficiency is low, and is far lower than the work efficiency of mechanical automation, and will greatly affect the enterprise benefit. Moreover, labor costs are rising year by year, further compressing the profit margins of enterprises.

### SUMMARY OF INVENTION

The present invention provides a workpiece exchange device and method, which can quickly and stably exchange workpieces.

A workpiece exchange device, including:
a workpiece spindle that can move along an X axis and a Z axis of a machine tool; and a workpiece library, wherein:
the workpiece library is used to store a workpiece, and the workpiece library is arranged on a side of the machine tool; and
the workpiece spindle can move to the workpiece library along the X axis and the Z axis of the machine tool, and grab the workpiece to be machined from the workpiece library or transfer a machined workpiece to the workpiece library.

Further, the workpiece exchange device also includes:
a detection device, wherein: the detection device can detect a position of the workpiece spindle, a state of a workpiece on the workpiece spindle, and a position and angle of a workpiece in the workpiece library, and the state includes: with workpiece, without workpiece, workpiece machined, and workpiece unmachined.

Further, a tool handle is provided at an end of the workpiece; and a broaching mechanism that matches with the tool handle is provided on the workpiece spindle.

Further, the workpiece library also includes a workpiece gripper and a chain shaft;
the workpiece gripper fixes the workpiece in the workpiece library via the tool handle; the workpiece gripper is arranged on a workpiece chain; the chain shaft drives the workpiece chain to transport the workpiece; and the chain shaft is fixed on an upright column of the machine tool.

A workpiece exchange method, including:
moving the workpiece spindle to an initial position away from the workpiece library in the Z axis direction and is located on a side where the workpiece can be grasped in the X axis direction;
starting the workpiece library and transporting the workpiece to move the workpiece to a position close to a machine tool;
moving the workpiece spindle along the Z axis to the workpiece library so that the workpiece spindle is coaxial with the workpiece;
moving the workpiece spindle along the X axis so that the workpiece spindle is clamped with the workpiece; and
driving the workpiece by the workpiece spindle to move away from the workpiece library along the Z axis.

A workpiece exchange method, including:
moving the workpiece spindle to an end of the Z axis away from the workpiece library;
starting the workpiece library and making a workpiece storage position of the workpiece library face a direction of a machine tool;
moving the workpiece spindle along the X axis so that a workpiece on the workpiece spindle is aligned with the workpiece storage position;
moving the workpiece spindle along the Z axis to the workpiece library, sending the workpiece into the workpiece library by the workpiece spindle, and
releasing the workpiece by the workpiece spindle; and
moving the workpiece spindle in a direction away from a cutter along the X-axis so that the workpiece is separated from the workpiece spindle.

The present invention provides a workpiece exchange device and method, which utilizes movement of a workpiece spindle in the X axis and Z axis directions and the cooperation of a tool handle structure and a broaching mechanism to realize taking out a workpiece in the workpiece library, transporting a workpiece to the workpiece library, and completing the workpiece exchange job. The present invention has the following beneficial effects: 1. the present invention uses the X-axis and Z-axis of the machine tool to make the workpiece spindle move in a plane and grab the workpiece with high precision and fast speed, and the position is closed-loop so that the grabbing action is more accurate, and the running speed and grabbing accuracy are both much higher than those of robots or mechanical hands, greatly improving the efficiency of workpiece exchange; 2. the present invention uses the X-axis and Z-axis of the machine tool to exchange workpieces, no additional auxiliary mechanisms are required, and the mechanical structure is more concise, has better reliability, and saves costs; 3. the workpiece is pre-mounted with a tool handle interface, the broaching mechanism and the tool handle structure are prior arts with heavy bearing capacity and high reliability, and are convenient for expanding the workpiece library; 4. the workpiece library is adjacent to the machining work space, the machine tool has a compact structure and occupies a small area, and the workpiece pick-up and delivery are completed via linear axis motions of the machine tool, which do not require additional work strokes, save a lot of space, and are beneficial to production organization.

### BRIEF DESCRIPTION OF DRAWINGS

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.
FIG. 1 is a structural schematic diagram of a workpiece exchange device disclosed by the present invention.
FIG. 2 is a schematic diagram of an initial position of a workpiece spindle before taking a workpiece in the present invention.
FIG. 3 is a schematic diagram of a position of the workpiece spindle when the workpiece spindle is ready to take the workpiece in the present invention, and is also a schematic diagram of a position of the workpiece spindle after the workpiece is detached when the workpiece spindle returns the workpiece.
FIG. 4 is a schematic diagram of a clamping connection between the workpiece spindle and the workpiece at the workpiece library position in the present invention.
FIG. 5 is a schematic diagram of a position of the workpiece spindle grabbing the workpiece and leaving the workpiece library in the present invention, and is also a schematic diagram of a position of the workpiece spindle before the workpiece spindle returns the workpiece.

In the figure: 1. workpiece library; 11. chain shaft; 12. workpiece chain; 13. workpiece gripper; 2. workpiece; 21. tool handle; 3. workpiece spindle; 31. broaching mechanism; 4. slide table; 5. pallet.

### DESCRIPTION OF EMBODIMENTS

In order to make the purposes, technical solutions and advantages of the embodiments of the present invention clearer, the technical solutions in the embodiments of the present invention will be clearly and completely described below with reference to the accompanying drawings in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

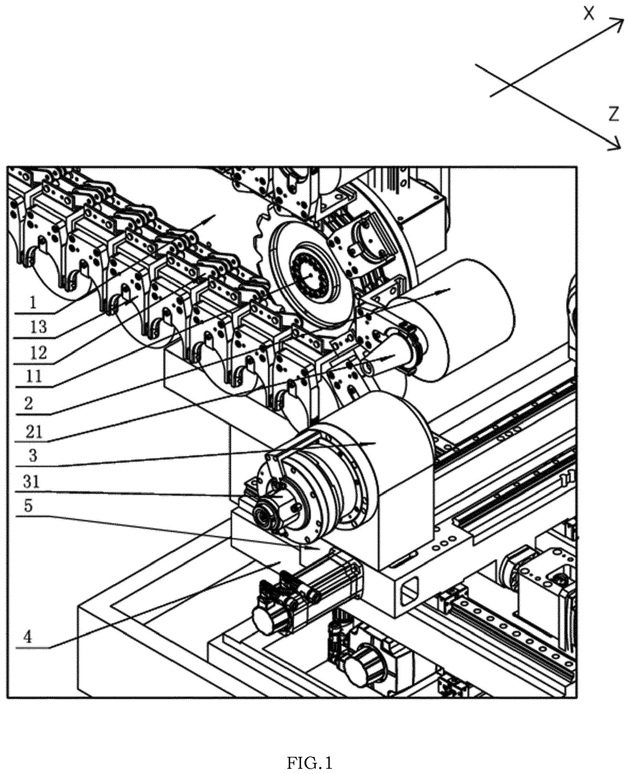

FIG. 1 shows a workpiece exchange device including a workpiece library 1, a workpiece spindle 3, wherein the workpiece library 1 is used to store a workpiece 2 and the workpiece spindle can move along the X axis and Z axis of a machine tool and grab the workpiece. A slide table 4 which can move along the X axis of the machine tool is provided on the bed base of the machine tool, a pallet 5 which can move along the Z axis of the machine tool is provided on the slide table 4, and the workpiece spindle 3 is provided on the pallet 5.

Two guide rails are provided on the bed base in the X axis direction, the bottom of the slide table 4 is provided with a slider that matches with the guide rails, and an end of the bed base is provided with a drive motor, which drives the slide table 4 to move via a lead screw matched with a nut. Two guide rails are provided on the slide table 4 in the Z axis direction, the bottom of the pallet 5 is provided with a slider, and an end of the slide table 4 is provided with an electric motor, which drives the pallet 5 to move along the Z axis on the slide table 4.

The workpiece library 1 is fixed on the left side surface of the machine tool, and the workpiece in the workpiece library is parallel to and in the same direction with the workpiece spindle. The side of the workpiece to be machined faces the upright column direction of the machine tool, and a tool handle 21 is provided on the other side of the workpiece. The X axis and Z axis of the machine tool form a plane coordinate system, the end of the workpiece library 1 close to the machine tool is in this coordinate system, and the workpiece spindle moves in this coordinate system. The linear axis motion on the machine tool has high precision, high speed and good stability, which improve the grasping and exchanging efficiency of the workpiece. The X axis and Z axis of the machine tool are parts of the machine tool itself, and have a simple structure and good stability, which make the workpiece grasping more reliable.

Further, the workpiece exchange device also includes a detection device, which is used to detect the position of the workpiece spindle 3, the state of the workpiece on the workpiece spindle 3 and the position and angle of the workpiece in the workpiece library 1, and the state of the workpiece on the workpiece spindle 3 includes: there is a workpiece on the workpiece spindle 3; there is no workpiece on the workpiece spindle 3; the workpiece on the workpiece spindle 3 has been machined; and the workpiece on the workpiece spindle 3 has not been machined. The detection device includes a plurality of sensors, and the plurality of sensors is used to detect whether there is a workpiece at the machining position, whether the angle of the workpiece is accurate, whether the workpiece has been machined, etc. During the movement of the workpiece spindle 3, the position closed-loop servo system of the machine tool is used to accurately detect the displacement amount of the workpiece spindle 3 and exerts a precise control thereon to enable the workpiece spindle to grasp the workpiece quickly and stably.

A broaching mechanism 31 is provided on the workpiece spindle 3, and an end of the workpiece 2 is provided with a tool handle structure that matches with the broaching mechanism 31. The matching between the broaching mechanism and the tool handle is a prior art which has stable grasping, high bearing capacity and high reliability, and is convenient for expanding the workpiece library.

The workpiece library 1 is integrated on the machine tool and is adjacent to the machining area of the machine tool, and has a compact structure and small footprint, which not only improve the utilization rate of the workshop, but also facilitate the production organization.
The workpiece library 1 also includes a chain shaft 11 and a workpiece chain 12 wound around the chain shaft 11. The chain shaft 12 is fixed on an upright column of the machine tool and is driven by a motor. The chain shaft 12 drives the workpiece chain 11 to move. A workpiece gripper 13 is provided on the workpiece chain 11. The workpiece 2 is fixed on the workpiece chain 12 via the workpiece gripper 13.

The workpiece chain 12 is composed of a plurality of chain links connected to each other in a hinged manner, and the workpiece chain 12 is wound around the outside of the chain shaft 11. The workpiece gripper 13 is provided on the workpiece chain 11. The workpiece gripper 13 fixes the workpiece 2 on the workpiece chain 12. An end of the workpiece 2 is pre-mounted with a tool handle 21. The tool handle 21 matches with the workpiece gripper 13 to realize the fixation of the workpiece in the workpiece library 1. The matching between the broaching mechanism 31 on an end surface of the workpiece spindle 3 and the tool handle structure on the workpiece 2 can realize the grasping of the workpiece 2. The structure of the workpiece gripper 13 is an existing tool holder structure, and the matching and fixation between the tool holder and the tool handle is a prior art. The workpiece library is constructed in the form of connecting the tool handle and the tool holder, and such construction has good reliability and is convenient for expanding the workpiece library when needed. The workpiece is clamped in the form of a tool handle, which has the advantages of heavy bearing capacity, stable clamping and fast exchanging, which greatly improve the exchanging efficiency.

A method for mounting workpiece, including the following steps.

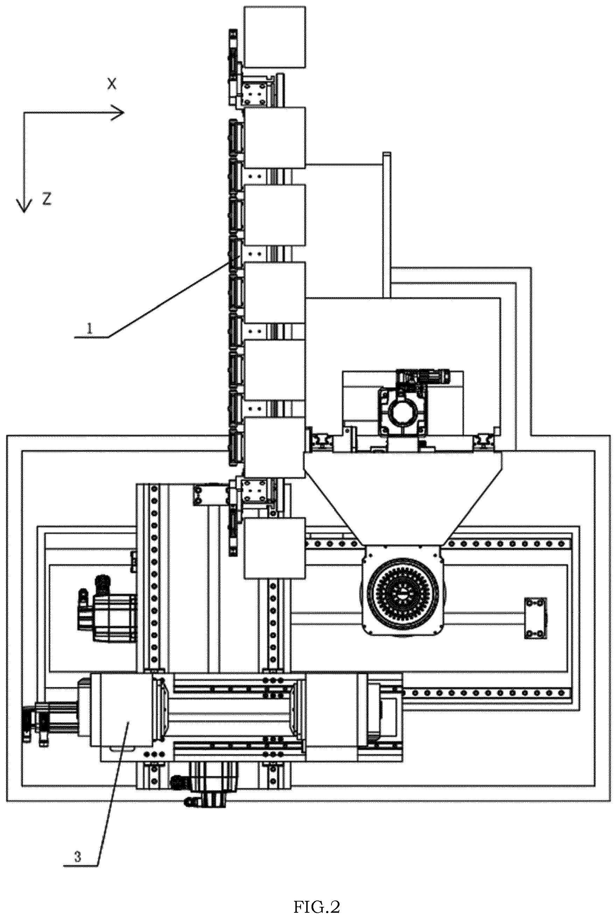

As shown in FIG. 2, the workpiece spindle is at the initial position. The initial position is far away from the workpiece library in the Z axis direction, and is located on the side where the workpiece can be grasped in the X axis direction. The initial position can be a plurality of points in a region that satisfies the above conditions. The workpiece library 1 is fixed on the left side surface of the machine tool, and the workpiece in the workpiece library is parallel to and in the same direction with the workpiece spindle. The side of the workpiece to be machined faces the upright column direction of the machine tool, and the tool handle 21 is provided on the other side of the workpiece. The side of the workpiece which can be grasped is the side with the tool handle of the workpiece.

Start the workpiece library, transport the workpiece, and make the workpiece move to a position close to the machine tool. The workpiece library cyclically transports the workpiece along the Z axis direction, and the workpiece is transported to an end of the workpiece library close to the machine tool, that is, the workpiece moves to a position close to the machine tool.

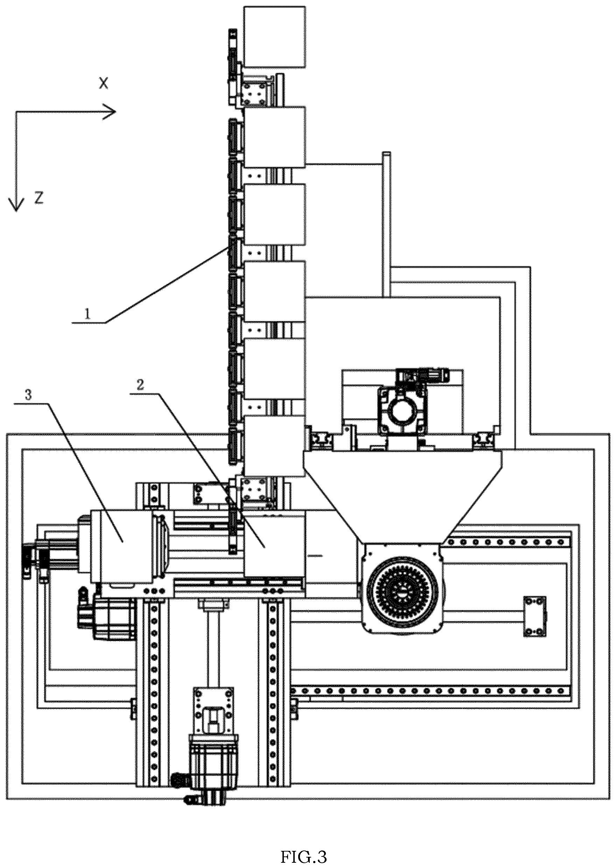

As shown in FIG. 3, the workpiece spindle moves along the Z axis to the workpiece library, so that the workpiece spindle is coaxial with the workpiece.

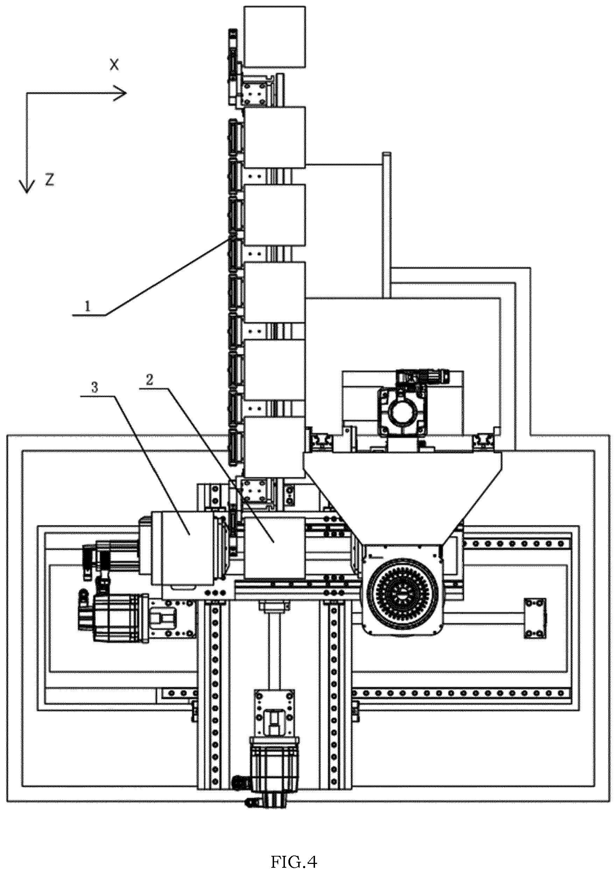

The workpiece spindle moves along the X axis and is clamped with the workpiece, and at this time, the position of the workpiece spindle is as shown in FIG. 4.

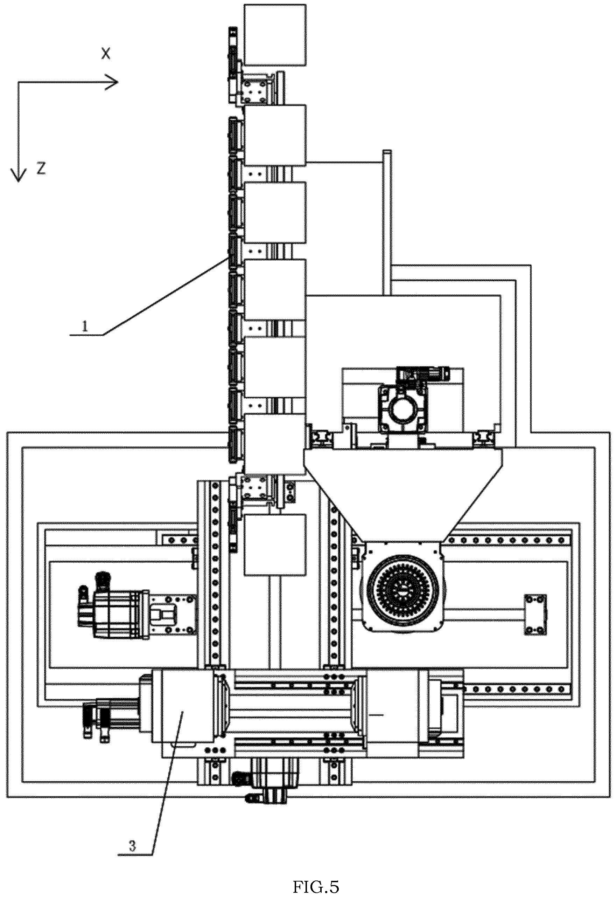

The workpiece spindle moves along the Z axis to separate the workpiece from the workpiece library, and at this time, the position of the workpiece spindle is as shown in FIG. 5, and then, the slide table and the pallet move in coordination to transport the workpiece to the machining position.

Before the workpiece is mounted, there is no workpiece on the workpiece spindle 3, and the slide table 4 transports the workpiece spindle 3 to an end of the X axis that is far away from a cutter 6. Start the workpiece library. The electric motor drives the chain shaft 11, and then causes the workpiece chain 12 to rotate, and drives the workpiece 2 to a position where the workpiece spindle 3 can grasp the workpiece 2. Meanwhile, the workpiece spindle 3 moves along the Z axis and gets close to the workpiece library 1. The detection device detects the position of the workpiece spindle 3, and confirms that the workpiece spindle 3 is in the proper position in the Z axis direction, that is, the workpiece spindle can move along the X axis and get clamped with the workpiece 2. After confirming by the detection, the pallet 5 moves along the X axis, activates the broaching mechanism on the end surface of the workpiece spindle, and tightens the workpiece via the broaching mechanism. After the workpiece 2 is clamped on the spindle, the slide table 4 and the pallet 5 move in coordination to transport the workpiece 2 to the machining area.

A method for achieving the return of workpiece, including the following steps.

The workpiece 2 is mounted in the workpiece spindle 3, the workpiece spindle 3 moves to an end of the Z axis away from the workpiece library, and the workpiece library is started. The workpiece chain 12 is rotated under the drive of the chain shaft 11, so that the workpiece storage position of the workpiece library faces the machine tool. That is, turn the opening of the workpiece gripper 13 to the position of the workpiece library for storing workpieces when the workpiece library faces the workpiece spindle, and get ready to receive the workpiece. The slide table 4 transports the workpiece spindle 3 along the X axis, and the detection device performs detection to confirm that the workpiece 2 is aligned with the workpiece library 1. At this time, the position of the workpiece spindle is as shown in FIG. 5. After confirming by the detection, as shown in FIG. 4, the workpiece spindle 3 moves along the Z axis to the workpiece library 1. The workpiece spindle 3 is transported by the pallet 5, and sends the workpiece 2 into the workpiece gripper 13. Start the tool release function of the broaching mechanism on the end surface of the workpiece spindle 3. Then, the workpiece spindle 3 releases the workpiece. As shown in FIG. 3, the slide table 4 moves away from the cutter 6 along the X axis, so that the workpiece 2 is completely separated from the workpiece spindle 3. The chain shaft rotates to drive the workpiece chain 12 to transport the workpiece 2 away, and the pallet moves along the Z axis to make the workpiece spindle leave the cutter library.

The workpiece exchange device disclosed by the present invention is not limited to the above-mentioned machine tool structure, and any machine tool without a table structure can utilize the present invention to realize the exchange of workpiece and workpiece spindle.

Finally, it should be noted that the above embodiments are only used to illustrate the technical solutions of the present invention, but not to limit them. Although the present invention has been described in detail with reference to the foregoing embodiments, a person skilled in the art should understand that the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

## Claims

1. A workpiece exchange device, comprising:
a workpiece library (1); and a workpiece spindle (3) that can move along an X axis and a Z axis of a machine tool, wherein:
the workpiece library (1) is used to store a workpiece (2), and the workpiece library (1) is arranged on a side of the machine tool; and
the workpiece spindle (3) can move to the workpiece library (1) along the X axis and the Z axis of the machine tool, and grab the workpiece (2) to be machined from the workpiece library (1) or transfer a machined workpiece to the workpiece library.

2. The workpiece exchange device according to claim 1, further comprising:
a detection device, wherein: the detection device can detect a position of the workpiece spindle (3), a state of a workpiece on the workpiece spindle (3), and a position and angle of a workpiece in the workpiece library (1), and the state includes: with workpiece, without workpiece, workpiece machined, and workpiece unmachined.

3. The workpiece exchange device according to claim 1, wherein: a tool handle (21) is provided at an end of the workpiece (2); and a broaching mechanism (31) that matches with the tool handle (21) is provided on the workpiece spindle (3).

4. The workpiece exchange device according to claim 3, wherein: the workpiece library (1) also includes a workpiece gripper (13) and a chain shaft (11);
the workpiece gripper (13) fixes the workpiece (2) in the workpiece library (1) via the tool handle (21); the workpiece gripper (13) is arranged on a workpiece chain (12); the chain shaft (11) drives the workpiece chain (12) to transport the workpiece (2); and the chain shaft (11) is fixed on an upright column of the machine tool.

5. A workpiece exchange method, comprising:
moving a workpiece spindle to an initial position that is away from a workpiece library in a Z axis direction and is located on a side where a workpiece can be grasped in an X axis direction;
starting the workpiece library and transporting the workpiece to move the workpiece to a position close to a machine tool;
moving the workpiece spindle along the Z axis to the workpiece library so that the workpiece spindle is coaxial with the workpiece;
moving the workpiece spindle along the X axis so that the workpiece spindle is clamped with the workpiece; and
driving the workpiece by the workpiece spindle to move away from the workpiece library along the Z axis.

6. A workpiece exchange method, comprising:
moving a workpiece spindle to an end of a Z axis that is away from a workpiece library;
starting the workpiece library and making a workpiece storage position of the workpiece library face a direction of a machine tool;
moving the workpiece spindle along an X axis so that a workpiece on the workpiece spindle is aligned with the workpiece storage position;
moving the workpiece spindle along the Z axis to the workpiece library, sending the workpiece into the workpiece library by the workpiece spindle, and releasing the workpiece by the workpiece spindle; and
moving the workpiece spindle in a direction away from a cutter along the X-axis so that the workpiece is separated from the workpiece spindle.
